# EUROPEAN PATENT APPLICATION

(11) **EP 4 629 412 A1**
(43) Date of publication of application: **08.10.2025**
(21) Application number: 23897292.1
(22) Date of filing: 19.10.2023
(51) Int. Cl.: H01M 50/204, H01M 10/613, H01M 10/625, H01M 10/643, H01M 10/6567, H01M 50/213, H01M 50/342

(54) **BATTERY PACK**

(30) Priority: 30.11.2022 JP 2022191304
(71) Applicant: Panasonic Intellectual Property Management Co., Ltd., Kadoma-shi, Osaka 571-0057 (JP)
(72) Inventor: SHIMIZU Keisuke, Kadoma-shi, Osaka 571-0057 (JP)
(74) Representative: Eisenführ Speiser
(86) International application number: PCT/JP2023/037805
(87) International publication number: WO 2024/116635

(57) **Abstract**

A battery pack includes a plurality of batteries housed in a case. Each of the plurality of batteries includes a safety valve that opens in response to an increase in an internal pressure of the battery to exhaust gas inside the battery. The plurality of batteries are immersed in a cooling liquid in the case. The case includes: a liquid enclosed portion in which the cooling liquid is enclosed; and a wall portion that is disposed below the liquid enclosed portion and divides the liquid enclosed portion and a cooling liquid free space. A safety-valve-side end portion of each of the plurality of batteries that is an end portion of the battery closer to the safety valve is in contact with or is closely opposed to a liquid-enclosed-portion-side surface of the wall portion that is a surface of the wall portion closer to the liquid enclosed portion.

## Description

### TECHNICAL FIELD

The present disclosure relates to a battery pack in which a plurality of batteries are housed.

### BACKGROUND ART

Secondary batteries, such as lithium-ion batteries, are used in the form of a battery pack in which a plurality of batteries are electrically connected to each other and housed in a case. Patent Literature (PTL) 1 discloses a battery pack in which batteries are housed in the space filled with cooling liquid to cool the batteries.

### Citation List

### Patent Literature

PTL 1: Japanese Unexamined Patent Application Publication No. 2014 - 60088

### SUMMARY OF THE INVENTION

When an abnormality occurs in a battery in the battery pack, heat is generated inside the battery, causing the surface of the outer body of the battery to increase in temperature. As the abnormality further progresses, high-temperature gas is eventually generated in the battery. The battery pack disclosed in PTL 1 can have a configuration in which each battery includes a safety valve that opens in response to an increase in the internal pressure of the battery. In this configuration, the gas is exhausted from the safety valve in the event of an abnormality of a battery, preventing the battery case from being damaged due to an increase in the internal pressure of the battery.

Moreover, when a thermal runaway occurs due to an abnormality occurred in a battery in the battery pack, the thermal runaway may spread from the battery having an abnormality to the surrounding batteries in a sequential manner. In order to prevent the spread of the thermal runaway, it is possible to increase the distance between adjacent batteries in the battery pack. However, it leads to an increase in the volume of the battery pack.

In addition, in order to prevent the spread of the thermal runaway, it is possible to provide a member having a low thermal conductivity or a high thermal capacity between adjacent batteries. However, in such a case, the number of components in the battery pack increases, leading to an increase in the cost of the battery pack and a decrease in the energy density.

A battery pack according to one aspect of the present disclosure includes a case and a plurality of batteries housed in the case. The plurality of batteries includes a safety valve that opens in response to an increase in an internal pressure of the battery to exhaust gas inside the battery. The plurality of batteries are immersed in a cooling liquid in the case. The case includes: a liquid enclosed portion in which the cooling liquid is enclosed; and a wall portion that is disposed below the liquid enclosed portion and divides the liquid enclosed portion and a cooling liquid free space. A safety-valve-side end portion of the plurality of batteries that is an end portion of the battery closer to the safety valve is in contact with or is closely opposed to a liquid-enclosed-portion-side surface of the wall portion that is a surface of the wall portion closer to the liquid enclosed portion.

The battery pack according to one aspect of the present disclosure prevents an increase in the volume of the battery pack and an increase in the number of components, and also prevents the spread of thermal runaway among a plurality of batteries in the event of an abnormality of a battery.

### BRIEF DESCRIPTION OF THE DRAWINGS

[FIG. 1] FIG. 1 is a perspective view of a battery pack that is an example of an embodiment.
[FIG. 2] FIG. 2 is a cross-sectional view taken along line A-A in FIG. 1.
[FIG. 3] FIG. 3 is a cross-sectional view of a battery included in the battery pack according to the embodiment.
[FIG. 4] FIG. 4 is a view corresponding to FIG. 2 and illustrating a state in which a battery having an abnormality is preferentially cooled in the embodiment.
[FIG. 5] FIG. 5 is a view corresponding to an enlarged view of portion B in FIG. 2 and illustrating a battery pack according to another example of the embodiment.
[FIG. 6] FIG. 6 is a schematic view illustrating a battery and a wall portion as seen in a direction of arrow C in FIG. 5.
[FIG. 7] FIG. 7 is a view corresponding to FIG. 5 and illustrating a state in which a battery having an abnormality is preferentially cooled in another example of the embodiment.
[FIG. 8] FIG. 8 is a view corresponding to FIG. 2 and illustrating a battery pack according to another example of the embodiment.

### DESCRIPTION OF EMBODIMENT

An exemplary embodiment according to the present disclosure will be described in detail below with reference to the attached drawings. The drawings include some schematic views, and the dimensional relationships in the length, width, and height of components between the individual drawings are not always the same. Among the structural elements described below, structural elements other than those recited in an independent claim representing the most generic concept are optional and non-essential structural elements.

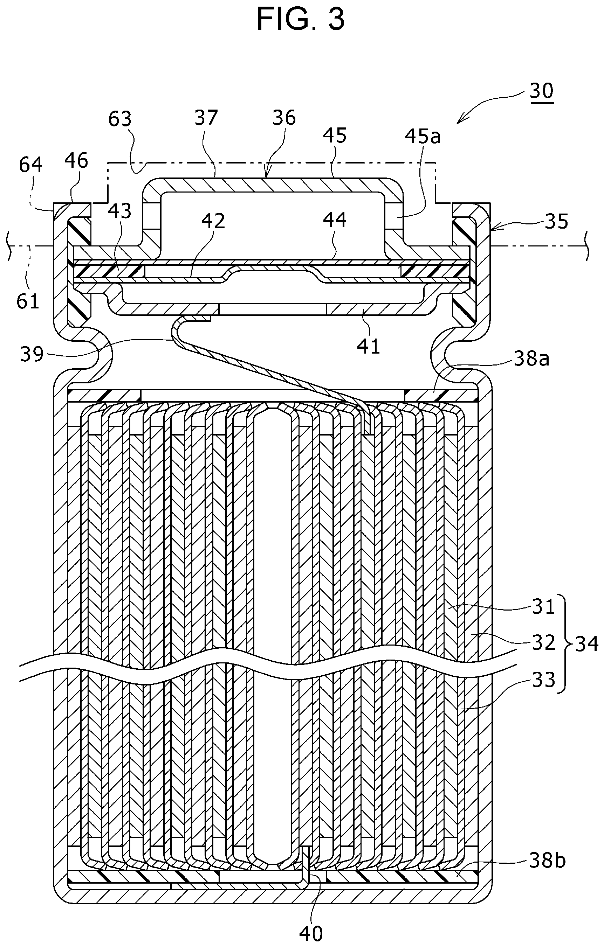

In the embodiment described below, an example will be described in which battery pack 1 has an approximately cuboid outer shape. In the drawings and the description of embodiment, the X-direction represents the lengthwise direction of battery pack 1 (case 10), the Y-direction represents the width direction of battery pack 1 (case 10), and the Z-direction represents the up-down direction (height direction) of battery pack 1 (case 10). The X-direction, Y-direction, and Z-direction are orthogonal to each other. In the Z-direction, the side on which cap 45 of battery 30 illustrated in FIG. 3 is provided is defined as the "lower side", and the opposite side is defined as the "upper side".

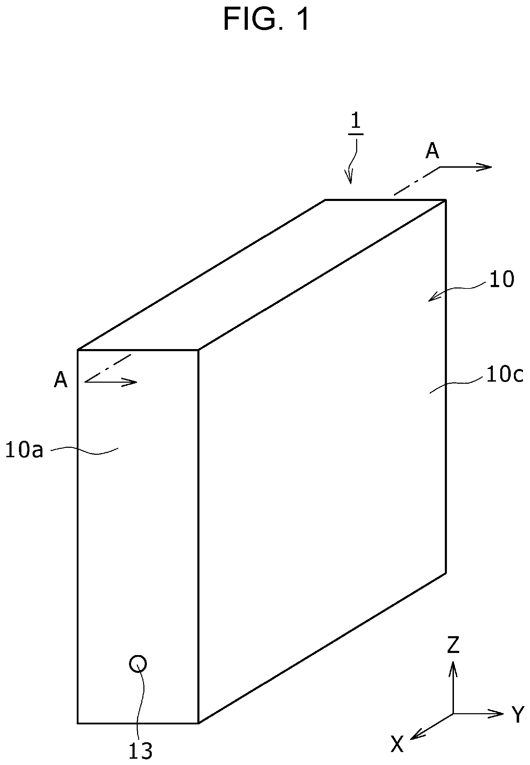

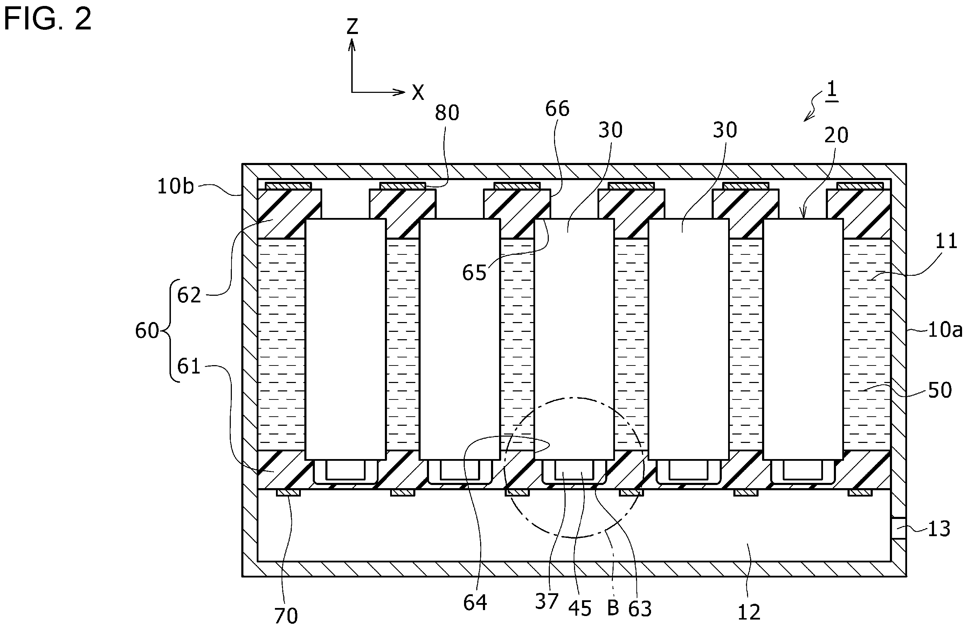

With reference to FIG. 1 and FIG. 2, an outline of battery pack 1 will be described. FIG. 1 is a perspective view of battery pack 1 that is an example of an embodiment. FIG. 2 is a cross-sectional view taken along line A-A in FIG. 1 (a cross-sectional view taken along XZ-plane passing through the center of battery pack 1 in the width direction).

Battery pack 1 includes battery block 20 that includes a plurality of batteries 30 and case 10 that houses battery block 20. Each battery 30 is, for example, a non-aqueous electrolyte secondary battery, such as a lithium-ion battery. Although there is no particular limitation on shape, size, and the like of battery 30, a cylindrical battery is suitable for battery 30. The case in which each battery 30 is a cylindrical battery will be mainly described below.

Case 10 has a box shape having an approximately cuboid outer shape. Case 10 includes liquid enclosed portion 11 in which insulating cooling liquid 50 is enclosed. Each battery 30 is partially immersed in cooling liquid 50 in liquid enclosed portion 11. This increases the cooling performance of each battery 30 because cooling liquid 50 is in direct contact with each battery 30.

Each of the plurality of batteries 30 includes safety valve 37 that opens in response to an increase in internal pressure to exhaust the gas inside battery 30. Case 10 includes first holder 61, to be described below, which is disposed below liquid enclosed portion 11 and divides liquid enclosed portion 11 and liquid discharge chamber 12 that is disposed below liquid enclosed portion 11. Liquid discharge chamber 12 corresponds to a cooling liquid free space. First holder 61 corresponds to a wall portion. The lower end portion of each battery 30 that is the end portion of battery 30 on the safety valve 37 side is in contact with or is closely opposed to the surface of first holder 61 on the liquid enclosed portion 11 side. With this, as described below, it is possible to prevent an increase in the volume of battery pack 1 and an increase in the number of components of battery pack 1. It is also possible to prevent the spread of the thermal runaway among the plurality of batteries 30 in the event of an abnormality of battery 30.

Battery pack 1 is used mainly as a power source for producing power. Battery pack 1 is used, for example, as a power source for motor-driven electric devices such as electric automobiles, power tools, power-assisted bicycles, electric motorcycles, electric wheelchairs, electric tricycles, and electric carts. The applications of battery pack 1 are not limited, and may be used as a power source for a variety of electrical devices other than motor-driven devices, such as cleaners, radios, lighting devices, digital cameras, and video cameras used indoors and outdoors.

Battery block 20 includes a plurality of batteries 30 and battery holder 60 into which both end portions of batteries 30 in the up-down direction Z are inserted and which holds batteries 30. Battery block 20 is disposed inside case 10, in the portion from the upper end portion to the middle portion of case 10 in the up-down direction Z. As a result, liquid discharge chamber 12 to be described later is formed at the lower end portion of the inside of case 10.

Battery 30 includes safety valve 37 that opens in response to an increase in internal pressure of battery 30 to exhaust the gas inside battery 30. As described in detail below, in the present embodiment, battery 30 includes safety valve 37 at the lower end portion of battery 30. Specifically, with a first direction as the up-down direction, batteries 30 are arranged in case 10 along the up-down direction so that safety valve 37 is positioned at the lower end portion which is the one end in the first direction. When the internal pressure of battery 30 increases in the event of an abnormality of battery 30, gas is exhausted from exhaust hole 45a (see FIG. 3) of cap 45 that forms safety valve 37.

Battery holder 60 includes first holder 61 that holds the lower sides of batteries 30 and second holder 62 that holds the upper sides of batteries 30. First holder 61 includes recesses 63 into which caps 45 that are the tip ends of the lower end portions of batteries 30 are inserted. Stepped portion 64 that is circular in cross section is provided around the entire circumference of the end portion of the opening of recess 63. The lower end portion of battery 30 is held by stepped portion 64. Cap 45 forms safety valve 37 of battery 30.

Case 10 will be described with reference to FIG. 1 and FIG. 2.

Case 10 is made of metal, such as aluminum, or resin, and has an approximately cuboid outer shape. Specifically, case 10 includes two first lateral walls 10a and 10b at both ends in lengthwise direction X and two second lateral walls 10c at both ends in width direction Y. Case 10 functions to protect batteries 30 housed inside case 10 from dust and water.

As illustrated in FIG. 2, liquid enclosed portion 11 in which cooling liquid 50 is enclosed is disposed in case 10. Liquid enclosed portion 11 also functions as a battery housing chamber in which a plurality of batteries 30 are housed.

Specifically, liquid enclosed portion 11 is the portion which is defined by case 10, first holder 61, and second holder 62, and in which batteries 30 excluding the both ends of battery 30 in up-down direction Z is arranged. Cooling liquid 50 is enclosed in liquid enclosed portion 11. Each battery 30 is partially immersed in cooling liquid 50. From the viewpoint of efficiently cooling batteries 30, it is preferable that cooling liquid 50 occupies at least half of the volume of liquid enclosed portion 11. In the example in FIG. 2, cooling liquid 50 entirely fills liquid enclosed portion 11. It may be that cooling liquid 50 is enclosed only in a portion of liquid enclosed portion 11 and a space is provided in the remaining portion of liquid enclosed portion 11. In this way, batteries 30 are in direct contact with cooling liquid 50 and are directly cooled by cooling liquid 50, allowing batteries 30 to be cooled efficiently. This increases the charging performance, durability, and safety of batteries 30.

Cooling liquid 50 has insulating properties. This prevents current leakage of battery 30 to other batteries 30 via cooling liquid 50. Examples of cooling liquid 50 include an insulating oil, a transformer oil, a silicone oil, a fluorine-based inert liquid such as hydrofluoroether.

As illustrated in FIG. 2, liquid discharge chamber 12 is disposed at the lower end portion of the inside of case 10 and below liquid enclosed portion 11 with first holder 61 interposed between liquid enclosed portion 11 and liquid discharge chamber 12. Liquid discharge chamber 12 is a cooling liquid free space provided below first holder 61. First holder 61 is disposed below liquid enclosed portion 11, and divides liquid enclosed portion 11 and liquid discharge chamber 12 so that liquid does not flow between each other. For this reason, the outer peripheral surface of first holder 61 is fixed in close contact with the inner peripheral surface of case 10, and has no hole that penetrates through first holder 61 in the thickness direction. As described above, the lower end portion of each battery 30 that is the end portion of battery 30 on the safety valve 37 side is in contact with or is closely opposed to the surface of first holder 61 on the liquid enclosed portion 11 side. As described in detail below, when the internal pressure of battery 30 increases in the event of an abnormality of battery 30, the gas generated inside battery 30 is exhausted from exhaust hole 45a (see FIG. 3) of cap 45. At this time, the portion of first holder 61 that is in contact with or is closely opposed to the lower end portion of battery 30 having an abnormality is melted and is destroyed by the effect of a contact with the high-temperature gas. When first holder 61 is destroyed in this manner, liquid discharge chamber 12 receives cooling liquid 50 that is discharged from liquid enclosed portion 11.

Case 10 includes exhaust portion 13, which is a through hole, in first lateral wall 10a disposed at one end of case 10 in lengthwise direction X which is the second direction (right end in FIG. 2). Exhaust portion 13 is positioned at the lower end portion of first lateral wall 10a opposite to liquid discharge chamber 12. As described above, when first holder 61 is destroyed by the effect of a contact with the high-temperature gas from battery 30 and cooling liquid 50 is discharged from liquid enclosed portion 11 into liquid discharge chamber 12, the high-temperature and high-pressure gas from battery 30 having an abnormality is also discharged into liquid discharge chamber 12. At this time, exhaust portion 13 allows the gas from liquid discharge chamber 12 to be exhausted to the outside of case 10.

The size of exhaust portion 13 is not limited as long as exhaust portion 13 allows the gas inside case 10 to be exhausted and prevents case 10 from being destroyed. Exhaust portion 13 may open at all times, or may have a function to break and open in response to an increase in internal pressure of case 10 in the event of an abnormality. This prevents case 10 from being destroyed while preventing dust and water from entering case 10.

Case 10 may include a covering member that covers exhaust portion 13. This further prevents dust and water from entering case 10. The covering member is fixed to the outer surface or inner surface of case 10 to block exhaust portion 13, for example, by means of a fixing means such as an adhesive. The covering member may be made of, for example, a breathable and waterproof material such as Gore-Tex (registered trademark) which allows the exhaust gas from inside case 10 to pass through and blocks liquid such as water from the outside.

Referring to FIG. 2, battery block 20 will be described. As described above, battery block 20 includes battery holder 60 into which both axial ends of the plurality of batteries 30 are inserted and which holds batteries 30.

Battery block 20 includes positive electrode terminal plates 70 that abut with the lower surface of first holder 61 and negative electrode terminal plates 80 that abut with the upper surface of second holder 62. Each positive electrode terminal plate 70 is electrically connected to cap 45 serving as a positive electrode external terminal of battery 30 via a positive electrode lead portion (not illustrated). Each negative electrode terminal plate 80 is electrically connected to the bottom of outer body 35 (see FIG. 3) serving as a negative electrode external terminal of battery 30 via a negative electrode lead portion (not illustrated). Positive electrode terminal plates 70 and negative electrode terminal plates 80 connect a plurality of batteries 30 in parallel.

Battery holder 60 may be made of, for example, a PC (polycarbonate) resin, a high thermal conductivity PPS (polyphenylene sulfide) resin, a resin containing a heat dissipating filler, or an injection moldable thermosetting resin. More specifically, battery holder 60 may be made of phenolic resin, unsaturated polyester, or unsaturated polyester mixed with a heatabsorbing agent. It is preferable to use, for at least first holder 61 of battery holder 60, a resin material that is easily melted and destroyed by a contact with the high-temperature gas exhausted from battery 30 in the event of an abnormality of battery 30.

Each recess 63 of first holder 61 is a circular bottomed hole provided in the upper surface of first holder 61. The end portion of the opening of recess 63 includes stepped portion 64 that is circular in cross section. Shoulder portion 46 on the outer peripheral surface of battery 30 (see FIG. 3) is fitted to and contacts the tubular portion of stepped portion 64. Shoulder portion 46 is at the lower end portion of battery 30 and has an outer diameter greater than the outer diameter of cap 45. With this, the lower side of battery 30 is held by first holder 61.

A space is provided between recess 63 and the outer surface of cap 45. Therefore, a gap is provided between exhaust hole 45a, to be described below, which opens in the outer peripheral surface of cap 45 and the inner peripheral surface of recess 63. The lower end surface of cap 45, which is the tip end surface of cap 45, and the bottom surface of recess 63 are closely opposed to each other through a minute gap. Exhaust hole 45a of cap 45 is in communication with the space in recess 63. The thickness of the portion of first holder 61 where the bottom of recess 63 is provided is set such that the portion is easily melted by a contact with high-temperature gas.

A portion of the positive electrode lead portion connected to positive electrode terminal plate 70 is embedded into the portion in the vicinity of recess 63 of first holder 61. The portion of the positive electrode lead that is lead out from the inner surface of recess 63 of first holder 61 is electrically connected to cap 45. The positive electrode lead portion may be integrally formed with positive electrode terminal plate 70.

Second holder 62 includes holding portions 65 each of which holds the upper end portion of battery 30 and openings 66 each of which exposes the bottom of battery 30 toward the top plate side of case 10. Each holding portion 65 of second holder 62 is a circular hole provided in the lower surface of second holder 62. The upper side of battery 30 is held by holding portion 65 by the top end portion of battery 30 being fitted in holding portion 65.

Opening 66 penetrates through second holder 62 in the up-down direction. The negative electrode lead portion is connected to the bottom of battery 30 through opening 66. The negative electrode lead portion may be integrally formed with negative electrode terminal plate 80.

Referring to FIG. 3, battery 30 will be described. The up-down direction of battery 30 in FIG. 3 is opposite to the up-down direction of battery 30 set in battery pack 1 for use as illustrated in FIG. 2. In other words, the bottom of battery 30 illustrated in FIG. 3 corresponds to the top side of battery 30 in an actual used state.

Battery 30 is a cylindrical battery, and is a lithium-ion battery. Battery 30 is not limited to a cylindrical battery, but may be a prismatic battery, a laminated battery, or the like. Battery 30 may be an aqueous battery or a non-aqueous battery. A lithium-ion battery is preferably used as an example of the non-aqueous battery.

Battery 30 includes electrode body 34, electrolyte (not illustrated), and outer body 35 that houses electrode body 34 and the electrolyte. Electrode body 34 includes positive electrode 31, negative electrode 32, and separator 33. Electrode body 34 has a wound structure in which positive electrode 31 and negative electrode 32 are wound spirally via separator 33. Outer body 35 has a bottomed cylindrical shape in which the lower side (upper side in FIG. 3) is open. The opening of outer body 35 is blocked by sealing body 36.

Battery 30 includes insulating plates 38a and 38b on the lower side and the upper side of electrode body 34 (the upper side and the lower side in FIG. 3), respectively. In the example illustrated in FIG. 3, positive electrode lead 39 attached to positive electrode 31 extends toward sealing body 36 through a through hole of insulating plate 38a, and negative electrode lead 40 attached to negative electrode 32 extends toward the bottom of outer body 35 through a through hole of insulating plate 38b. Positive electrode lead 39 is connected, by welding or the like, to the surface of internal terminal plate 41 on the electrode body 34 side. Internal terminal plate 41 serves as the bottom plate of sealing body 36. Internal terminal plate 41 is electrically connected to cap 45 which serves as the top plate of sealing body 36 and as the positive electrode external terminal. Negative electrode lead 40 is connected to the inner surface of the bottom of outer body 35 by welding or the like, and the bottom of outer body 35 serves as the negative electrode external terminal.

Sealing body 36 has a stacked structure in which, in order from the electrode body 34 side, internal terminal plate 41, first valve body 42, insulating member 43, second valve body 44, and cap 45 are stacked. Each of the components of sealing body 36 has a disk or ring shape, for example, and the components excluding insulating member 43 are electrically connected to each other. The central portion of first valve body 42 and the central portion of second valve body 44 are connected to each other, and insulating member 43 is interposed between the peripheral portions of first valve body 42 and second valve body 44.

In the present embodiment, first valve body 42, second valve body 44, and cap 45 form safety valve 37 of sealing body 36. When the internal pressure of battery 30 increases in the event of an abnormality of battery 30, first valve body 42 deforms to push second valve body 44 up toward cap 45 and breaks. This blocks the current path between first valve body 42 and second valve body 44. As the internal pressure further increases, second valve body 44 breaks, so that the gas is exhausted through exhaust hole 45a provided in the lateral surface of the protrusion of cap 45.

The position at which the safety valve is provided is not limited to the present embodiment. It may be that the safety valve is provided at the bottom of outer body 35 of battery 30 so that the internal gas is exhausted from the bottom when the internal pressure of battery 30 increases. In such a case, the bottom surface of recess 63 on the surface of first holder 61 on the battery 30 side is opposite to the safety valve on the bottom of battery 30, and the shoulder portion of outer body 35 of battery 30 on the bottom side is fitted into the tubular portion of the stepped portion provided at the end portion of the opening of recess 63. Here, the up-down direction of battery 30 in a used state corresponds to the up-down direction in FIG. 3.

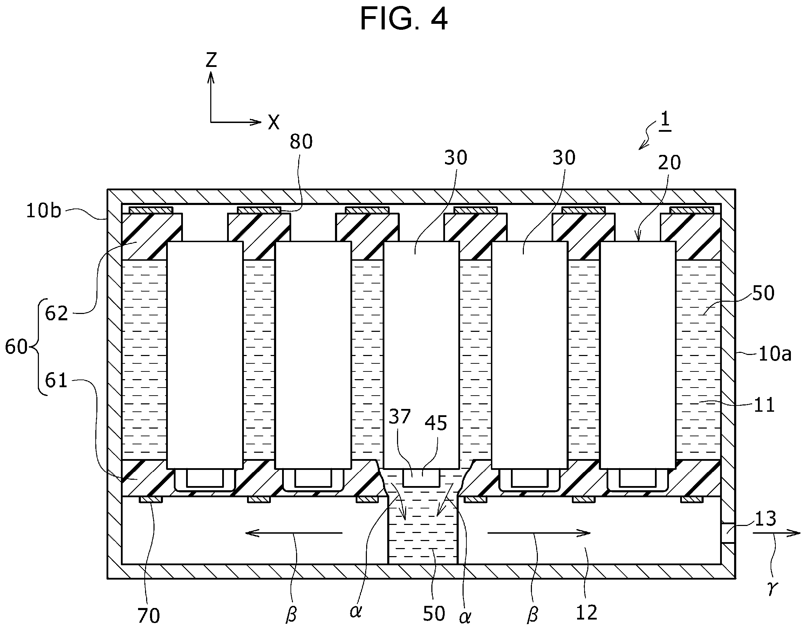

As described above, case 10 includes, below liquid enclosed portion 11, first holder 61 that divides liquid enclosed portion 11 and liquid discharge chamber 12. Shoulder portion 46 of batteries 30 on the lower end portion that is on the safety valve side is in contact with the surface of first holder 61 on the liquid enclosed portion 11 side. Cap 45 is closely opposed to recess 63 in the surface of first holder 61 on the liquid enclosed portion 11 side. With this, when the internal pressure of battery 30 increases in the event of an abnormality of battery 30, the gas generated inside battery 30 is exhausted through exhaust hole 45a (see FIG. 3) of cap 45 into recess 63. At this time, the portion of first holder 61 that is in contact with or is closely opposed to the lower end portion of battery 30 having an abnormality is melted and destroyed by a contact with the high-temperature gas. With this, as illustrated in FIG. 4, a gap is generated between the lower end portion of battery 30 having an abnormality and first holder 61, and cooling liquid 50 is discharged from liquid enclosed portion 11 to liquid discharge chamber 12 in the direction of arrows α in FIG. 4 through the gap. Moreover, as indicated by arrows β in FIG. 4, cooling liquid 50 spreads in liquid discharge chamber 12. The gas exhausted from battery 30 having an abnormality is exhausted out of case 10 through exhaust portion 13 of first lateral wall 10a, as indicated by arrow γ in FIG. 4.

In this way, when cooling liquid 50 is discharged into liquid discharge chamber 12 through the gap between the lower end portion of battery 30 having an abnormality and first holder 61, cooling liquid 50 contacts the lower end portion of battery 30 having an abnormality while flowing. Moreover, cooling liquid 50 in liquid enclosed portion 11 entirely flows into the gap between the lower end portion of battery 30 having an abnormality and first holder 61. Therefore, battery 30 having an abnormality is cooled preferentially over other batteries 30, thus preventing the spread of thermal runaway among the plurality of batteries 30 in the event of an abnormality of battery 30.

Furthermore, in order to prevent the spread of the thermal runaway described above, in the present embodiment, it is not necessary to increase the distance between adjacent batteries or to provide a member having a low thermal conductivity or a high thermal capacity between adjacent batteries. This can prevent an increase in the volume of battery pack 1 and an increase in the number of components of battery pack 1.

Case 10 includes liquid discharge chamber 12 below first holder 61. Liquid discharge chamber 12 receives cooling liquid 50 that is discharged from liquid enclosed portion 11 when first holder 61 is destroyed. This prevents leakage of cooling liquid 50 in liquid discharge chamber 12 to the outside of case 10. Even when cooling liquid 50 is discharged out of case 10 through exhaust portion 13, the flow speed of cooling liquid 50 in the vicinity of battery 30 can be adjusted by an adjustment of the size of exhaust portion 13. This facilitates a balance between controlling the discharge speed of cooling liquid 50 out of case 10 and increasing the cooling performance of battery 30.

Even when cooling liquid 50 is discharged to the outside of case 10 through exhaust portion 13, an adjustment of the position of exhaust portion 13 prevents cooling liquid 50 from leaking through exhaust portion 13 to an inappropriate position outside case 10.

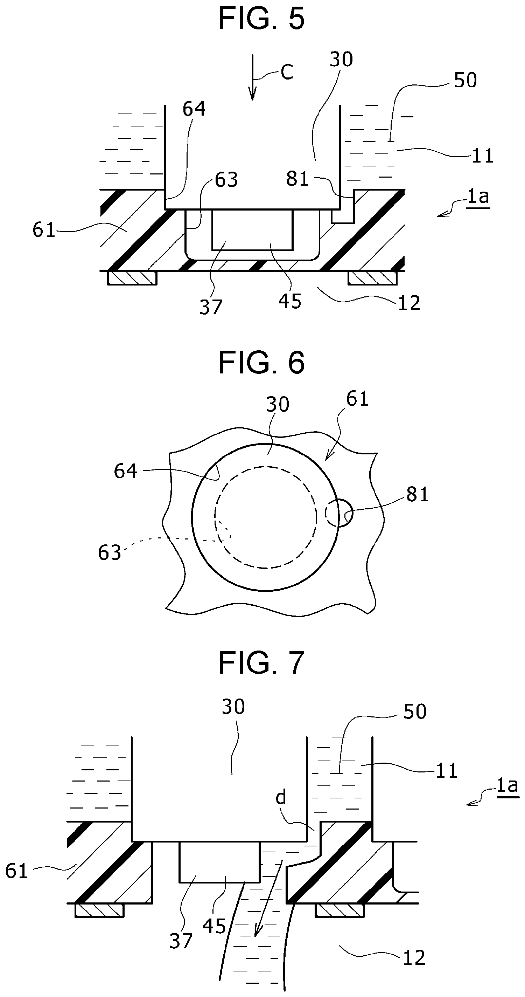

FIG. 5 is a view corresponding to an enlarged view of portion B in FIG. 2 and illustrating battery pack 1a according to another example of the embodiment. FIG. 6 is a schematic diagram of battery 30 and first holder 61 in FIG. 5 as seen in the direction of arrow C in FIG. 5. FIG. 7 is a view corresponding to FIG. 5 and illustrating a state in which battery 30 having an abnormality is cooled preferentially in the event of an abnormality of battery 30 in another example of the embodiment.

In the configuration according to the example, as illustrated in FIG. 5 and FIG. 6, small recess 81 that is circular in cross section is provided in a portion of the circumference of stepped portion 64 of recess 63 provided in the surface of first holder 61 on the liquid enclosed portion 11 side. Small recess 81 extends over both stepped portion 64 and the portion radially outside of and adjacent to stepped portion 64. In this configuration, the distance between recess 63 and small recess 81 in first holder 61 is small. Therefore, when high-temperature gas is exhausted into recess 63 through exhaust hole 45a (see FIG. 3) of cap 45 in the event of an abnormality of battery 30, the high-temperature of the gas can easily melt and destroy the portion between small recess 81 and recess 63 of first holder 61. Accordingly, as illustrated in FIG. 7, gap d is generated between a portion of the circumference of the outer peripheral surface of the shoulder portion at the lower end potion of battery 30 and first holder 61. This facilitates the discharge of cooling liquid 50 in liquid enclosed portion 11 through gap d into liquid discharge chamber 12. In this case, too, in a similar manner to the configurations of FIG. 1 to FIG. 3, it is possible to prevent the spread of the thermal runaway among the plurality of batteries 30 in the event of an abnormality of battery 30. In this way, in the present embodiment, battery 30 can also be cooled by using cooling liquid 50 discharged from liquid enclosed portion 11 only by forming a gap between a portion of the circumference of the outer peripheral surface of battery 30 and first holder 61. In this example, the other configurations and operations are similar to those in FIG. 1 to FIG. 3.

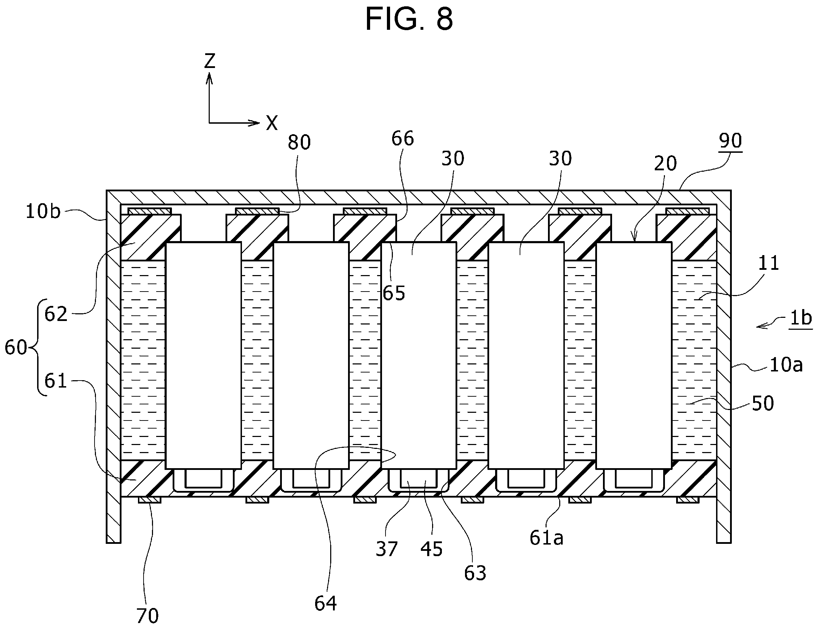

FIG. 8 is a view corresponding to FIG. 2 and illustrating battery pack 1b according to another example of the embodiment. In the configuration according to the example, case 90 is similar to the configuration in FIG. 1 to FIG. 3 with the bottom plate removed from case 10 and exhaust portion 13 (see FIG. 2) omitted.

With this, in the configuration according to the example, liquid discharge chamber 12 (see FIG. 2) is not provided below first holder 61. First holder 61 divides liquid enclosed portion 11 and the space outside case 90 as a cooling liquid free space. Lower surface 61a of first holder 61 that is on the cooling liquid free space side defines the outer surface of case 90.

In the configuration according to the example, too, in the event of an abnormality of battery 30, the gas generated inside battery 30 is exhausted from battery 30, and the portion of first holder 61 that is in contact with or is closely opposed to the lower end portion of battery 30 is melted and is destroyed. This generates a gap between the lower end portion of battery 30 having an abnormality and first holder 61, and cooling liquid 50 is discharged into the space outside case 90 through the gap. Therefore, battery 30 having an abnormality is cooled preferentially over other batteries 30, thus preventing the spread of thermal runaway among batteries 30 in the event of an abnormality of battery 30. In this example, the other configurations and operations are similar to those in FIG. 1 to FIG. 3.

In the embodiment described above, the case in which a gap is provided between recess 63 of first holder 61 and cap 45 of battery 30 has been described. However, the inner surface of recess 63 may be in contact, for example, in close contact with the outer surface of cap 45.

In the embodiment described above, liquid enclosed portion 11 and the cooling liquid free space are divided by first holder 61. However, the present disclosure is not limited to such an example. For example, it may be that a wall portion made of resin or metal is disposed in case 10, and the wall portion divides liquid enclosed portion 11 and the cooling liquid free space so that the liquid does not flow between each other. In this case, the end portions of the plurality of batteries 30 on the safety valve side are in contact with or are closely opposed to the surface of the wall portion on the liquid enclosed portion 11 side. In a similar manner to the embodiment described above, this also prevents an increase in the volume of the battery pack and an increase in the number of components of the battery pack, and also prevents the spread of thermal runaway among a plurality of batteries in the event of an abnormality of a battery.

Moreover, in the embodiment described above, the case has been described in which positive electrode terminal plates 70 for electrically connecting the positive electrode external terminals of the plurality of batteries 30 and negative electrode terminal plates 80 for electrically connecting the bottom of outer body 35 (see FIG. 3) as the negative electrode external terminals of the plurality of batteries 30 are provided outside relative to the both ends of battery 30 in the up-down direction and are opposed to each other in the up-down direction of battery 30. However, both of positive electrode terminal plates 70 for electrically connecting the positive electrode external terminals of the plurality of batteries 30 and negative electrode terminal plates 80 for electrically connecting outer body 35 (see FIG. 3) as the negative electrode external terminals of the plurality of batteries 30 may be provided at one side of battery 30 in the up-down direction. Moreover, in this case, a plate member made of an insulating material may be provided between positive electrode terminal plates 70 for electrically connecting the positive electrode external terminals of the plurality of batteries 30 and negative electrode terminal plates 80 for electrically connecting the bottom of outer body 35 (see FIG. 3) as the negative electrode external terminals of the plurality of batteries 30 to reliably prevent the short circuit between positive electrode terminal plates 70 and negative electrode terminal plates 80. For example, in the configuration illustrated in FIG. 2, it may be that the up-down direction of each battery 30 is reversed, positive electrode terminal plate 70 and negative electrode terminal plate 80 are provided on the upper side of battery 30, an exhaust portion (safety valve) formed of a thin portion or the like is provided at the bottom of outer body 35 which is the lower side of battery 30, and the end portion of battery 30 on the exhaust portion side is in contact with or is closely opposed to the wall portion of the battery holder or the like.

Moreover, in the embodiment, the example has been described in which the battery holder is melted and forms a flow path. However, the present disclosure is not limited to such an example. It may be that a wall portion of the battery holder or the like includes a thin portion that is destroyed by the pressure of the gas discharged from the safety valve of a battery, so that a flow path is formed in the wall portion.

Moreover, the present disclosure is not limited to the embodiment described above. Various modifications or alterations may be made to the exemplary embodiment within the scope of the present disclosure as defined by the appended claims of the present application or their equivalents.

### REFERENCE MARKS IN THE DRAWINGS

- 1, 1a, 1b: battery pack
- 10: case
- 10a, 10b: first lateral wall
- 10c: second lateral wall
- 11: liquid enclosed portion
- 12: liquid discharge chamber
- 13: exhaust portion
- 16: exhaust path
- 18: storage
- 20: battery block
- 30: battery
- 31: positive electrode
- 32: negative electrode
- 33: separator
- 34: electrode body
- 35: outer body
- 36: sealing body
- 37: safety valve
- 38a, 38b: insulating plate
- 39: positive electrode lead
- 40: negative electrode lead
- 41: internal terminal plate
- 42: first valve body
- 43: insulating member
- 44: second valve body
- 45: cap (positive electrode external terminal)
- 45a: exhaust hole
- 46: shoulder portion
- 50: cooling liquid
- 60: battery holder
- 61: first holder
- 61a: surface
- 62: second holder
- 63: recess
- 64: stepped portion
- 65: holding portion
- 66: opening
- 70: positive electrode terminal plate
- 80: negative electrode terminal plate
- 81: small recess
- 90: case

## Claims

1. A battery pack comprising:
a case; and
a plurality of batteries housed in the case,
wherein the plurality of batteries includes a safety valve that opens in response to an increase in an internal pressure of the battery to exhaust gas inside the battery,
the plurality of batteries are immersed in a cooling liquid in the case,
the case includes:
a liquid enclosed portion in which the cooling liquid is enclosed; and
a wall portion that is disposed below the liquid enclosed portion and divides the liquid enclosed portion and a cooling liquid free space, and
a safety-valve-side end portion of the plurality of batteries is in contact with or is closely opposed to a liquid-enclosed-portion-side surface of the wall portion, the safety-valve-side end portion being an end portion of the battery closer to the safety valve, the liquid-enclosed-portion-side surface being a surface of the wall portion closer to the liquid enclosed portion.

2. The battery pack according to claim 1,
wherein the wall portion includes a recess which is provided in the liquid-enclosed-portion-side surface of the wall portion and into which a tip end of the safety-valve-side end portion of the plurality of batteries is inserted,
a shoulder portion of an outer peripheral surface of the plurality of batteries is in contact with an end portion of an opening of the recess, the shoulder portion having an outer diameter greater than an outer diameter of the tip end of the safety-valve-side end portion, and
an outer peripheral surface of the tip end includes an exhaust hole through which the gas inside the battery is exhausted, the exhaust hole being in communication with a space in the recess.

3. The battery pack according to claim 1 or claim 2,
wherein the case includes:
a liquid discharge chamber that receives the cooling liquid discharged from the liquid enclosed portion when the wall portion is destroyed, and
the liquid discharge chamber is the cooling liquid free space disposed below the wall portion.

4. The battery pack according to claim 1 or claim 2,
wherein the cooling liquid free space is a space outside the case, and
a surface of the wall portion closer to the cooling liquid free space defines an outer surface of the case.
